# FASCICULE DE BREVET EUROPEEN

(11) **EP 3 280 374 B1**
(45) Date de publication et mention de la délivrance du brevet: **08.01.2020**
(21) Numéro de dépôt: 16718234.4
(22) Date de dépôt: 07.04.2016
(51) Int. Cl.: A61H 1/02, A61H 3/00

(54) **EXOSQUELETTE COMPRENANT UNE LIAISON MÉCANIQUE DE CHEVILLE AVEC DEUX AXES DE PIVOTEMENT**
EXOSKELETT MIT EINER MECHANISCHEN KNÖCHELVERBINDUNG MIT ZWEI DREHACHSEN
EXOSKELETON INCLUDING A MECHANICAL ANKLE LINK HAVING TWO PIVOT AXES

(30) Priorité: 07.04.2015 FR 1552975
(43) Date de publication de la demande: 14.02.2018
(73) Titulaire: Wandercraft, 75004 Paris (FR)
(72) Inventeur: GAYRAL, Thibault, 94250 Gentilly (FR); BOULANGER, Alexandre, 75017 Paris (FR)
(74) Mandataire: Regimbeau
(86) Numéro de dépôt international: PCT/EP2016/057626
(87) Numéro de publication internationale: WO 2016/162425

(56) Documents cités:
- GB-A- 2 485 454
- JP-A- 2012 110 497
- KR-A- 20130 045 776
- US-A1- 2012 283 613

## Description

### DOMAINE DE L'INVENTION

L'invention concerne un système d'aide à la mobilité d'une personne, ou exosquelette, capable notamment de supporter un utilisateur touché par une déficience motrice.

### ARRIERE-PLAN TECHNOLOGIQUE

Un exosquelette comprend, de manière générale, une structure de bassin, deux structures de jambes, deux structures de pied et deux structures de hanche :
- La structure de bassin est configurée pour se positionner derrière les reins d'un utilisateur lorsqu'il porte l'exosquelette et peut être attachée au bassin à l'aide d'un harnais ou de sangles.
- Chaque structure de jambe est configurée pour se positionner en regard de l'une des jambes (gauche ou droite, selon la structure) de l'utilisateur, et comprend un segment de jambe supérieur et un segment de jambe inférieur, agencés pour venir en regard de la cuisse et du mollet de l'utilisateur, respectivement.
- Chaque structure de pied comprend par ailleurs un plan de support sur lequel l'un des pieds (gauche ou droit, selon la structure) de l'utilisateur peut venir en appui lorsque le pied est à plat.
- Chaque structure de hanche est configurée pour se positionner en regard de l'une des hanches (gauche ou droite, selon la structure).

Le contrôle complet de l'exosquelette nécessite des actionneurs et des liaisons structurelles pour permettre le mouvement de l'exosquelette et autoriser ainsi un déplacement de l'utilisateur portant l'exosquelette. Les liaisons mécaniques comprennent généralement des liaisons pivot, glissière et/ou rotule, tandis que les actionneurs peuvent comprendre des vérins, des moteurs, etc.

Ces liaisons mécaniques et les actionneurs sont choisis de manière à permettre le déplacement de l'exosquelette sans risquer de blesser l'utilisateur qui le porte. A cet effet, il est notamment important de ne pas appliquer d'efforts non supportés par les membres de l'utilisateur et de proposer un exosquelette présentant à la fois un faible encombrement et un poids modéré.

Le document WO 2011/002306 décrit par exemple un système de commande d'un exosquelette porté par un utilisateur et comportant des actionneurs associés aux différents membres de l'exosquelette correspondant chacun à une partie du corps de l'utilisateur. L'exosquelette comprend en particulier un actionneur pied principal et un actionneur pied secondaire, configurés pour actionner la structure de pied et lui permettre de s'adapter au terrain.

A cet effet, l'actionneur pied principal est configuré pour actionner une rotation de la structure de pied par rapport à la structure de jambe inférieure à l'aide d'une liaison pivot autour d'un axe parallèle à un axe de pivotement du genou. L'actionneur pied secondaire quant à lui a pour objet de permettre à la structure de pied de s'adapter au terrain. Toutefois, une telle structure de cheville est relativement complexe, encombrante, lourde et énergivore.

Il a également été proposé dans le document FR 14 52370 déposé le 21 mars 2014 au nom de la Demanderesse un exosquelette comprenant une structure de jambe, une structure de pied et une liaison pivot cheville reliant la structure de pied à la structure de jambe, dans lequel la liaison pivot cheville présente un axe de pivotement oblique, c'est-à-dire un axe de pivotement qui n'est compris dans aucun plan de référence parmi le plan frontal, le plan sagittal et le plan horizontal de l'exosquelette. Ainsi, la liaison pivot cheville forme un angle non nul compris entre 0° et 30° avec le plan de support de la structure de pied, et un angle non nul compris entre 0° à 45° par rapport à un plan perpendiculaire à l'axe longitudinal médian du plan de support. Une telle configuration présente l'avantage de produire des mouvements au niveau de la cheville qui se rapprochent des mouvements naturels de l'homme avec seulement un actionneur orienté comme indiqué ci-dessus. La structure de l'exosquelette est donc simplifiée et allégée. Par ailleurs, cette configuration permet de réduire l'encombrement latéral de la jambe, réduisant ainsi les risques de collision lors d'un mouvement de marche.

Déplus le document KR20130045776 décrit un exosquelette tel que décrit dans le préambule de la revendication 1.

### RESUME DE L'INVENTION

Un objectif de l'invention est donc de proposer une solution permettant à la fois d'améliorer la stabilité lors d'un mouvement de marche d'un exosquelette et de reproduire correctement le mouvement de marche humaine, qui soit de faible encombrement et présente un poids modéré.

Pour cela, l'invention propose un exosquelette comprenant :
- une structure de pied, comprenant un plan de support configuré pour recevoir un pied d'un utilisateur,
- une structure de jambe inférieure configurée pour recevoir une partie inférieure d'une jambe de l'utilisateur,
- une liaison mécanique de genou, configurée pour relier la structure de jambe inférieure à une structure de jambe supérieure configurée pour recevoir une partie supérieure d'une jambe de l'utilisateur, la liaison mécanique de genou présentant un axe de pivotement, et
- une liaison mécanique de cheville, reliant la structure de pied à la structure de jambe inférieure, la liaison mécanique de cheville comprenant une première liaison pivot présentant un premier axe de pivotement, ledit premier axe de pivotement étant sensiblement parallèle à l'axe de pivotement de la liaison mécanique de genou. Par sensiblement parallèle, on comprendra ici que le premier axe de pivotement X1 forme un angle compris entre 0° et une quinzaine de degrés avec l'axe de pivotement Y, de préférence entre environ 6° et 10°, typiquement de l'ordre de 8°.

La liaison mécanique de cheville comprend en outre une deuxième liaison pivot présentant un deuxième axe de pivotement, qui s'étend dans un plan perpendiculaire au premier axe de pivotement et forme avec le plan de support un angle compris entre 30° et 60° lorsque l'exosquelette est debout et au repos.

Cette configuration permet d'assurer un contact plan entre la structure de pied de l'exosquelette et le sol lors de la phase d'appui du mouvement de marche, et un mouvement de marche proche du mouvement biomécanique d'un être humain lors de la phase d'oscillation du mouvement de marche de l'exosquelette.

Certaines caractéristiques préférées mais non limitatives de l'exosquelette décrit ci-dessus sont les suivantes, prises individuellement ou en combinaison :
- le deuxième axe de pivotement forme un angle compris entre 40° et 50° avec le plan de support lorsque l'exosquelette est debout et au repos, de préférence de l'ordre de 45°,
- l'exosquelette comprend en outre deux actionneurs en parallèle, fixés entre la structure de pied et la structure de jambe inférieure et configurés pour contrôler une position angulaire de la structure de pied autour du premier et du deuxième axe de pivotement de la liaison mécanique de cheville,
- les actionneurs en parallèle sont fixés de part et d'autre de la structure de jambe inférieure,
- les actionneurs comprennent chacun un actionneur linéaire, monté sur la structure de jambe inférieure, et une biellette, montée d'une part sur l'actionneur linéaire et d'autre part sur la structure de pied à l'aide d'une liaison rotule, de sorte qu'une translation de l'actionneur linéaire entraine une rotation de la biellette par rapport à la structure de pied,
- les actionneurs linéaires comprennent un vérin associé à un moteur, de préférence du type vis à billes ou vis-écrou,
- le vérin comprend une tige filetée, entrainée en rotation par le moteur, et un écrou fixe en rotation par rapport à la structure de jambe, la biellette comprenant une extrémité montée sur l'écrou de sorte qu'une translation de l'écrou entraine une translation de l'extrémité de la biellette,
- chaque actionneur comprend en outre au moins une glissière comportant un rail de guidage, fixé sur la structure de jambe inférieure, et un chariot, mobile en translation le long du rail de guidage, l'écrou étant fixé sur le chariot de la glissière,
- le chariot comprend un premier patin et un deuxième patin, montés mobiles en translation sur le rail de guidage de la glissière et connectés solidairement par une pièce de liaison, l'écrou et la biellette étant fixés sur la pièce de liaison du chariot,
- une liaison mécanique entre l'écrou et la biellette comprend une liaison pivot et une liaison mécanique entre la biellette et la structure de pied comprend une liaison rotule,
- la liaison mécanique entre l'écrou et la biellette comprend un joint de Cardan, ou deux liaisons pivot d'axe sensiblement perpendiculaire,
- le vérin comprend en outre un roulement mécanique simple interposé entre une sortie du moteur et la tige filetée, ledit roulement mécanique présentant un défaut d'alignement compris entre cinq minutes d'arc et quinze minutes d'arc, typiquement d'environ dix minutes d'arc,
- la première liaison pivot est positionnée sur la structure de pied de sorte à venir en regard d'une malléole interne et d'une malléole externe d'un utilisateur portant l'exosquelette, et/ou la deuxième liaison pivot est positionnée sur la structure de pied de sorte à venir en regard d'un talon ou d'un tendon d'Achille de l'utilisateur,
- le premier axe de pivotement et l'axe de pivotement de la liaison mécanique de genou forment un angle compris entre 0° et une quinzaine de degrés, de préférence entre 6° et 10°, par exemple 8°,
- le premier axe de pivotement s'étend dans un plan parallèle au sol lorsque l'exosquelette est debout et au repos,
- l'exosquelette comprend en outre une pièce intermédiaire qui est d'une part montée sur la structure de pied en étant libre en rotation par rapport à la structure de pied autour du deuxième axe de pivotement, et d'autre part montée à pivotement autour du premier axe de pivotement sur la structure de jambe inférieure,
- la pièce intermédiaire est montée sur la structure de jambe inférieure et sur la structure de pied à l'aide de liaisons pivot passives,
- l'exosquelette comprend en outre un ensemble formant ressort en compression, fixé d'une part sur la pièce intermédiaire et d'autre part sur la structure de jambe inférieure,
- l'ensemble formant ressort comprend un premier organe élastiquement déformable, le premier organe étant connecté d'une part à la pièce intermédiaire, entre la première et la deuxième liaison pivot, à l'aide d'un élément de fixation, et d'autre part à la structure de jambe inférieure, ledit premier organe étant configuré pour appliquer un effort de traction sur la pièce intermédiaire,
- l'élément de fixation est flexible,
- l'ensemble formant ressort comprend en outre un corps creux de forme sensiblement allongée présentant une première extrémité et une deuxième extrémité opposée à la première extrémité, ledit corps creux étant monté dans un logement formé dans la structure de jambe inférieure, la première extrémité du corps creux étant en regard d'un fond du logement, et le premier organe étant monté dans le logement et comprimé entre le fond dudit logement et la deuxième extrémité du corps creux,
- l'exosquelette comprend en outre un deuxième organe élastiquement déformable, logé dans le corps creux, le deuxième organe étant fixé à proximité de la première extrémité du corps creux, l'élément de fixation coopérant avec le deuxième organe de sorte que le deuxième organe est configuré pour tendre l'élément de fixation, et l'élément de fixation étant logé dans le corps creux et faisant saillie de la première extrémité dudit corps creux et du fond du logement,
- le premier organe et/ou le deuxième organe comprend un ressort en compression,
- le premier organe et le deuxième organe comprennent un ressort en compression, le deuxième organe présentant une raideur inférieure à la raideur du premier organe,
- l'élément de fixation présente une surépaisseur, logée dans le corps creux, et le deuxième organe comprend une pièce de blocage configurée pour former une butée pour la surépaisseur,
- l'élément de fixation comprend en outre une butée d'arrêt, fixée sur l'élément de fixation, et le corps creux comprend en outre une protubérance, fixée sur une paroi interne du corps creux et configurée pour coopérer avec la butée d'arrêt et former un obstacle pour la butée d'arrêt de l'élément de fixation,
- le corps creux comprend en outre un boulon, fixé à proximité de sa deuxième extrémité, le premier organe étant en butée contre ledit boulon.

Un deuxième objectif de l'invention est de proposer un ensemble formant ressort capable de soulager les actionneurs de l'exosquelette pendant certaines phases seulement de la marche, par exemple pendant la phase de propulsion à la fin de la phase d'appui.

Pour cela, l'invention propose un ensemble formant ressort en compression, fixé d'une part sur une première pièce et d'autre part sur une deuxième pièce, mobile par rapport à la première pièce, comprenant :
- un premier organe élastiquement déformable, le premier organe étant connecté d'une part à la première pièce à l'aide d'un élément de fixation, et d'autre part à la deuxième pièce, ledit premier organe étant configuré pour appliquer un effort de traction sur la première pièce, et
- un corps creux de forme sensiblement allongée présentant une première extrémité et une deuxième extrémité opposée à la première extrémité, ledit corps creux étant monté dans un logement fixé solidairement à la deuxième pièce, la première extrémité du corps creux étant en regard d'un fond du logement, et le premier organe étant monté dans le logement et comprimé entre le fond dudit logement et la deuxième extrémité du corps creux.

Certaines caractéristiques préférées mais non limitatives de l'ensemble décrit ci-dessus sont les suivantes, prises individuellement ou en combinaison :
- l'élément de fixation est flexible,
- l'élément de fixation est un câble,
- l'ensemble formant ressort comprend en outre un deuxième organe élastiquement déformable, logé dans le corps creux, le deuxième organe étant fixé à proximité de la première extrémité du corps creux, l'élément de fixation coopérant avec le deuxième organe de sorte que le deuxième organe est configuré pour tendre l'élément de fixation, et l'élément de fixation étant logé dans le corps creux et faisant saillie de la première extrémité dudit corps creux et du fond du logement,
- le logement est formé dans la deuxième pièce,
- le premier organe et/ou le deuxième organe comprend un ressort en compression,
- le premier organe et le deuxième organe comprennent un ressort en compression, le deuxième organe présentant une raideur inférieure à la raideur du premier organe,
- l'élément de fixation présente une surépaisseur, logée dans le corps creux, et le deuxième organe comprend une pièce de blocage configurée pour former une butée pour la surépaisseur,
- l'élément de fixation comprend en outre une butée d'arrêt, fixée sur l'élément de fixation, et le corps creux comprend en outre une protubérance, fixée sur une paroi interne du corps creux et configurée pour coopérer avec la butée d'arrêt et former un obstacle pour la butée d'arrêt de l'élément de fixation,
- le corps creux comprend en outre un boulon, fixé à proximité de sa deuxième extrémité, le premier organe étant en butée contre ledit boulon.

### BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :

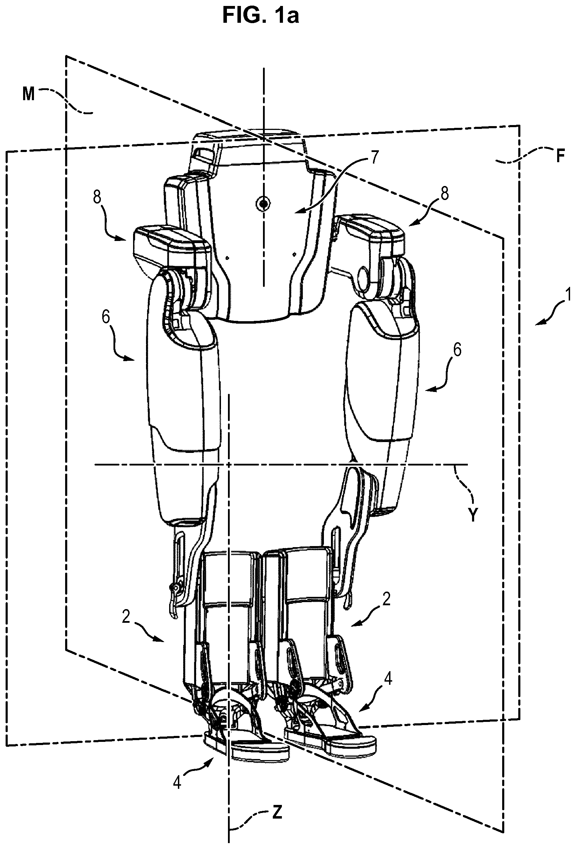

La figure 1a est une vue en perspective d'un exemple de réalisation d'un exosquelette conforme à l'invention,

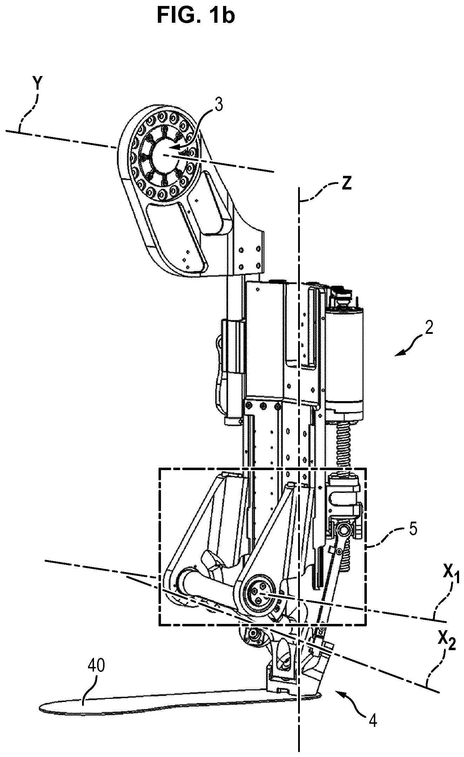

La figure 1b est une vue en détail d'une structure de pied et d'une structure de jambe inférieure de l'exosquelette de la figure 1a,

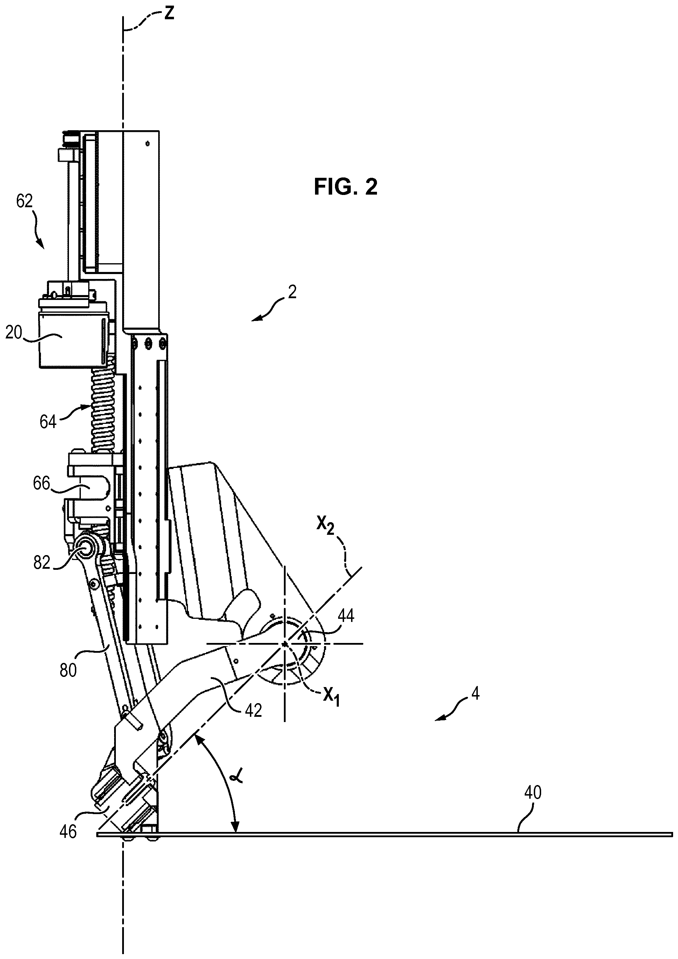

La figure 2 est une vue de côté et en coupe d'un premier exemple de réalisation d'une structure de pied et d'une structure de jambe inférieure conforme à l'invention,

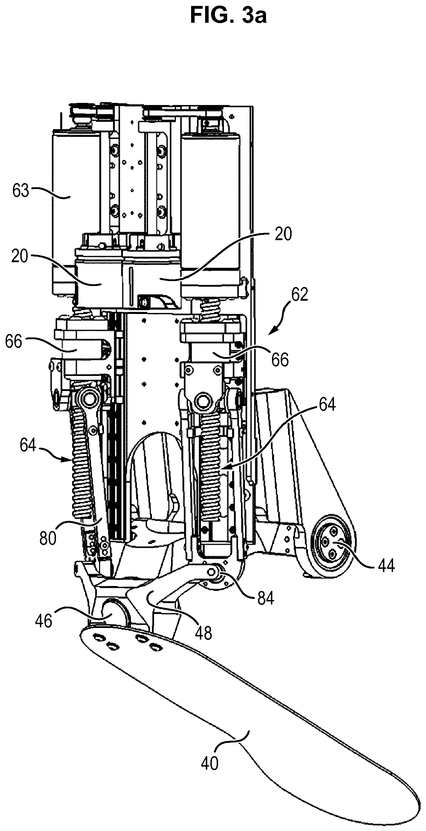

La figure 3a est une vue de trois quart arrière des structures de la figure 2, la structure de pied étant tendue,

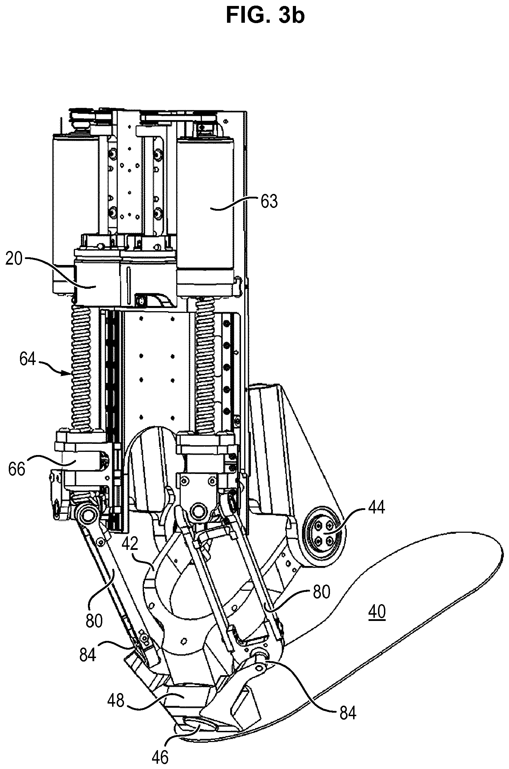

La figure 3b est une vue de trois quart arrière des structures de la figure 2, la structure de pied étant fléchie,
La figure 4 est un schéma cinématique des structures de la figure 2,
La figure 5 est une vue de trois quarts arrière simplifiée d'un deuxième exemple de réalisation d'une structure de pied et d'une structure de jambe inférieure conforme à l'invention, sur laquelle un seul actionneur a été représenté,
La figure 6a est une vue en perspective d'un premier mode de réalisation d'un actionneur pouvant être utilisé pour les structures de la figure 2,
La figure 6b est une vue en coupe d'une partie de la figure 6a,
La figure 7 est une vue en perspective d'un deuxième mode de réalisation d'un actionneur pouvant être utilisé pour les structures de la figure 2,
La figure 8a est une vue en coupe d'un troisième mode de réalisation d'un actionneur pouvant être utilisé pour les structures de la figure 2,
La figure 8b est une vue en perspective de l'actionneur de la figure 8a,

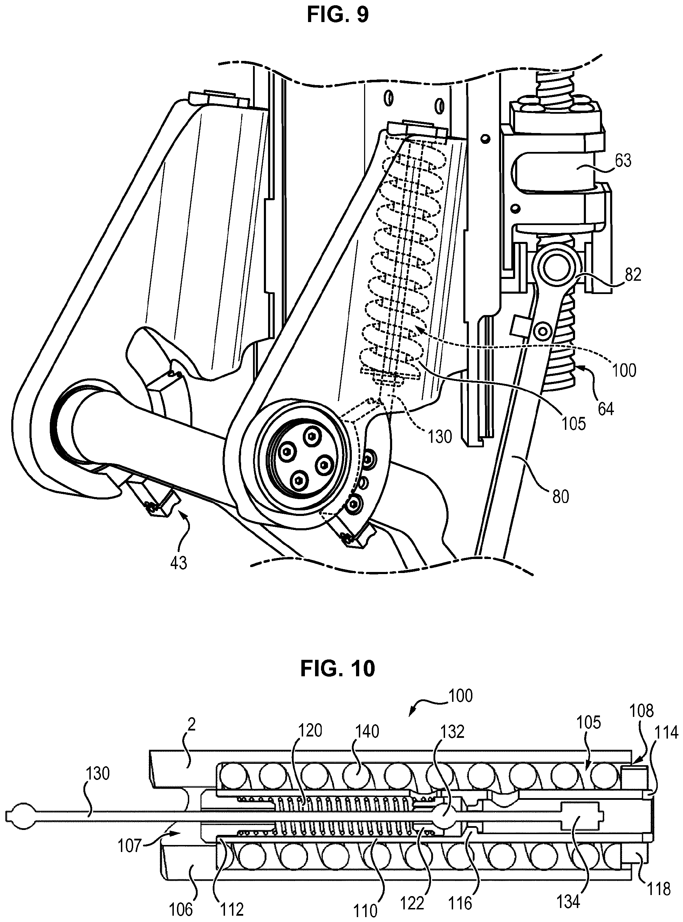

La figure 9 est un détail de la figure 1b, sur lequel est représenté un exemple de réalisation d'un ensemble formant ressort, et
La figure 10 est une vue en coupe de l'ensemble formant ressort de la figure 9.

### DESCRIPTION DETAILLEE D'UN MODE DE REALISATION

Un exosquelette 1 conforme à l'invention comprend :
- une structure de pied 4, comprenant un plan de support 40 configuré pour recevoir un pied d'un utilisateur,
- une structure de jambe inférieure 2 et une structure de jambe supérieure 6, configurées pour recevoir respectivement une partie inférieure et une partie supérieure d'une jambe de l'utilisateur,
- une liaison mécanique de genou 3, reliant la structure de jambe inférieure 2 à la structure de jambe supérieure, et
- une liaison mécanique de cheville 5, reliant la structure de pied 4 à la structure de jambe inférieure 2.

De manière optionnelle, l'exosquelette 1 peut également comprendre :
- une structure de bassin 7, configurée pour se positionner derrière les reins de l'utilisateur lorsqu'il porte l'exosquelette 1, et qui peut être attachée au bassin de l'utilisateur à l'aide d'un harnais ou de sangles, et
- une structure de hanche 8 configurée pour se positionner en regard de l'une des hanches de l'utilisateur, par exemple derrière ou sur le côté. Ici, la structure de hanche 8 s'étend latéralement par rapport à la hanche associée de l'utilisateur.

De préférence, l'exosquelette 1 est symétrique par rapport à un plan médian M de l'exosquelette 1 et comprend une structure de pied 4 droit et une structure de pied 4 gauche, une structure de jambe droite et une structure de jambe gauche, une liaison mécanique de genou 3 droit et une liaison mécanique de genou 3 gauche, une structure de hanche droite et une structure de hanche gauche, etc.

Par plan médian M de l'exosquelette 1, on comprendra ici le plan fictif séparant la moitié gauche de la moitié droite de l'exosquelette 1. Ce plan M est également connu sous le nom de coupe sagittale médiane.

L'exosquelette 1 comprend également un plan frontal F, qui est un plan fictif perpendiculaire au plan médian M et qui sépare l'exosquelette 1 en une partie antérieure et une partie postérieure.

Dans ce qui suit, seule l'une des moitiés de l'exosquelette 1 sera décrite, afin de faciliter la lecture de la description. On comprendra bien entendu que cette description s'applique mutatis mutandis à la moitié gauche de l'exosquelette 1, celle-ci étant symétrique à sa moitié droite par rapport au plan médian M de l'exosquelette 1.

De manière conventionnelle, la liaison mécanique de genou 3 peut présenter un axe de pivotement Y, afin de permettre à un utilisateur portant l'exosquelette 1 de plier le genou, notamment lors d'un mouvement de marche. A cet effet, la liaison mécanique de genou 3 peut par exemple comprendre une liaison pivot dont l'axe correspond à l'axe de pivotement Y du genou. Dans un mode de réalisation, la liaison mécanique du genou ne comprend qu'un seul degré de liberté, à savoir la rotation autour de l'axe de pivotement Y.

L'axe de pivotement Y du genou s'étend globalement perpendiculairement à la direction de marche de l'exosquelette 1, dans un plan sensiblement horizontal.

La liaison mécanique de cheville 5 quant à elle comprend une première liaison pivot 50 présentant un premier axe de pivotement X1 et une deuxième liaison pivot 52 présentant un deuxième axe de pivotement X2. Dans un mode de réalisation, la liaison mécanique de cheville 5 ne comprend que ces deux degrés de liberté. La Demanderesse s'est en effet aperçue qu'une liaison mécanique de cheville à trois degrés de liberté entrainait une augmentation significative du poids et de l'encombrement de la liaison mécanique, et que deux degrés de liberté étaient suffisants pour reproduire la marche humaine et s'adapter au terrain.

Le premier axe de pivotement X1 est sensiblement parallèle à l'axe de pivotement Y de la liaison mécanique de genou 3, afin de permettre à l'utilisateur de plier et de tendre son pied dans la structure de pied 4. Ce mouvement correspond par exemple au mouvement réalisé par le pied lors d'un mouvement de marche dans une direction sensiblement perpendiculaire au plan frontal F de l'exosquelette 1.

Par sensiblement parallèle, on comprendra ici que le premier axe de pivotement X1 forme un angle compris entre 0° et une quinzaine de degrés avec l'axe de pivotement Y. Plus précisément, l'ensemble de la structure jambe inférieure 2 présente un plan vertical P1 séparant une structure jambe inférieure en deux parties égales interne et externe ; ce plan P1 forme un angle compris entre zéro degrés et une quinzaine de degrés avec le plan médian M de l'exosquelette 1 et donc avec la direction de la marche, de telle sorte que les structures de pied 4 de l'exosquelette 1 divergent légèrement lorsque l'exosquelette 1 est debout et au repos. Le premier axe de pivotement X1 est alors perpendiculaire à ce plan P1. Par exemple, le premier axe de pivotement X1 peut former un angle compris entre 6° et 10°, typiquement 8°, avec l'axe de pivotement Y.

En d'autres termes, si on considère que la structure de jambe inférieure 2 s'étend suivant une direction principale définissant un axe longitudinal Z, le premier axe de pivotement X1 est compris dans un plan sensiblement perpendiculaire à cet axe longitudinal et s'étend sensiblement perpendiculairement à la direction de marche de l'exosquelette 1 et perpendiculairement au plan P1.

En pratique, on notera que l'axe longitudinal Z de la structure de jambe inférieure 2 présente un angle compris entre 90 et 95° avec le plan de support 40 de la structure de pied 4, et donc le sol, lorsque l'exosquelette 1 est debout et en position de repos. Le premier axe de pivotement X1 est donc compris dans un plan sensiblement parallèle au sol, lorsque l'exosquelette 1 est debout et au repos.

Le premier axe de pivotement X1 s'étend de préférence au niveau de la malléole interne et de la malléole externe du pied de l'utilisateur qui porte l'exosquelette 1.

Le deuxième axe de pivotement X2 s'étend quant à lui dans un plan perpendiculaire au premier axe de pivotement X1 et forme avec le plan de support 40 un angle α compris entre 30° et 60° lorsque l'exosquelette 1 est debout et au repos. Ce deuxième axe de pivotement X2 correspond sensiblement à l'axe de Henke de la cheville d'un être humain et permet à la structure de pied 4 de l'exosquelette 1 d'effectuer des mouvements d'inversion et d'éversion. Plus précisément, lorsque le plan P1 et le plan médian ne sont pas confondus, le deuxième axe de pivotement X2 correspond à la projection de l'axe de Henke dans le plan P1.

De préférence, le deuxième axe de pivotement X2 forme un angle α compris entre 40° et 50° avec le plan de support 40 lorsque l'exosquelette 1 est debout et au repos, de préférence de l'ordre de 45°. Ces valeurs angulaires permettent en effet d'améliorer l'ergonomie de l'exosquelette 1, en se rapprochant davantage de l'angle réel de la projection de l'axe de Henke de l'utilisateur portant l'exosquelette 1 dans le plan P1. L'exosquelette 1 est donc plus stable, et les risques de blessure de l'utilisateur, qui peut être touché par une déficience motrice et ne peut donc pas maîtriser les mouvements d'une partie de son corps dans l'exosquelette 1, sont réduits.

Afin de commander les mouvements de la structure de pied 4 par rapport à la structure de jambe inférieure 2, l'exosquelette 1 peut notamment comprendre deux actionneurs 60 en parallèles, fixés entre la structure de pied 4 et la structure de jambe inférieure 2 et configurés pour contrôler la position angulaire de la structure de pied 4 autour du premier et du deuxième axe de pivotement X2 de la liaison mécanique de cheville 5. Les actionneurs 60 en parallèle peuvent notamment s'étendre de part et d'autre de la structure de jambe inférieure 2 et de la structure de pied 4.

Ici, les actionneurs 60 parallèles s'étendent en regard d'une partie interne et d'une partie externe du mollet de l'utilisateur qui porte l'exosquelette 1.

La mise en œuvre de deux actionneurs 60 en parallèle présente l'avantage de permettre la cumulation de la puissance de plusieurs moteurs sur un seul mouvement d'actionnement. Une telle puissance peut être avantageuse lorsqu'un couple important est nécessaire dans un faible intervalle de temps, par exemple pour prévenir une chute de l'exosquelette 1 et de son utilisateur. Par ailleurs, les actionneurs 60 sont fixes par rapport à la structure de jambe inférieure 2, ce qui permet de réduire la masse en mouvement par rapport à la structure de jambe inférieure et donc son inertie.

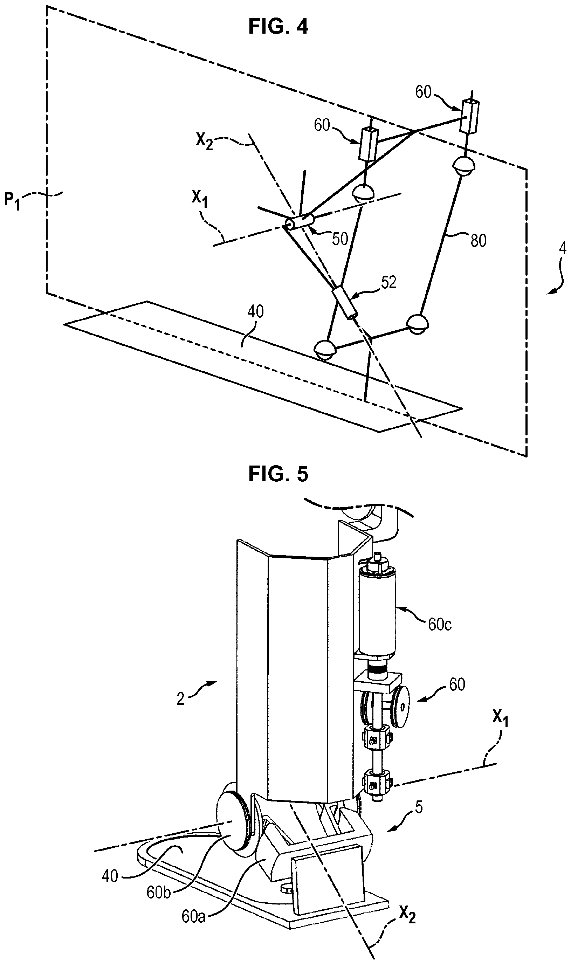

Dans une première forme de réalisation schématisée en figure 5, les actionneurs 60 parallèles peuvent notamment comprendre deux engrenages 60, de préférence à axes parallèles. Dans cette forme de réalisation, chacun des engrenages 60 peut notamment comprendre :
- un organe d'engrènement d'attaque 60a, monté sur la structure de jambe inférieure 2 et coaxial avec le premier axe de pivotement X1. L'organe d'engrènement d'attaque 60a peut être du type pignon conique ou roue dentée, à denture droite, hélicoïdale ou à chevrons.
- un organe d'engrènement de sortie 60b, monté sur la structure de pied 4 et présentant un axe de rotation parallèle au premier axe de pivotement X1 et un axe de rotation par rapport au deuxième axe de pivotement X2. L'organe d'engrènement de sortie 60b peut également être du type pignon conique ou roue dentée, à denture droite, hélicoïdale ou à chevrons.

Afin de réduire l'encombrement des actionneurs 60, l'organe d'engrènement d'attaque 60a comprend de préférence une roue dentée, tandis que l'organe d'engrènement de sortie 60b peut comprendre un secteur de couronne denté.

Les engrenages 60 sont de préférence disposés en regard de la malléole interne et de la malléole externe du pied de l'utilisateur qui porte l'exosquelette 1.

Chaque engrenage 60 est par ailleurs entrainé en rotation par un moteur 60c dédié. Typiquement, les moteurs 60c sont fixés sur la structure de jambe inférieure 2 et peuvent être positionnés en regard du mollet de l'utilisateur, lorsque celui-ci porte l'exosquelette 1.

Afin de limiter l'encombrement latéral des actionneurs 60, les moteurs sont de préférence déportés par rapport aux engrenages 60 et entrainent leur organe d'engrènement d'attaque 60a associé à l'aide d'un système d'entrainement du type poulie-courroie.

Des mécanismes de réduction peuvent en outre être prévus entre chaque moteur 60c et l'organe d'engrènement d'attaque 60a associé. De préférence, les mécanismes de réduction sont placés entre les moteurs 60s et les mécanismes de transmission, pour réduire l'encombrement de chaque actionneur 60.

Dans une deuxième forme de réalisation, les actionneurs 60 parallèles peuvent chacun comprendre un actionneur linéaire 62 et une biellette 80. A cet effet, l'actionneur linéaire 62 peut notamment être monté fixe sur la structure de jambe inférieure 2, tandis que la biellette 80 peut être montée d'une part sur l'actionneur linéaire 62 à l'aide d'une liaison mécanique 82 et d'autre part sur la structure de pied 4 à l'aide d'une liaison rotule 84, de sorte qu'une translation de l'actionneur linéaire 62 entraine une rotation de la biellette 80 par rapport à la structure de pied 4.

Cette forme de réalisation présente l'avantage d'être structurellement simple, de poids limité et de faible encombrement. La transmission du mouvement des actionneurs 60 est en outre réalisée directement grâce aux biellettes 80 qui sont capables de supporter les efforts appliqués par le moteur et la réaction de la structure de pied 4 sans nécessiter pour autant un encombrement important.

Chaque actionneur linéaire 62 peut comprendre un vérin 62, actionné par un moteur 63 associé.

Le vérin 62 peut notamment être du type vis-écrou 66 ou vis à billes et comprendre à cet effet une tige filetée 64 entrainée en rotation par le moteur 63 et un écrou 66 fixe en rotation par rapport à la structure de jambe inférieure 2. Une vis à billes présente par ailleurs l'avantage d'être réversible et d'avoir un bon rendement.

Dans ce cas, chacun des vérins 62 peut être associé à un codeur 20, fixé de préférence en parallèle des moteurs 63 afin de réduire leur encombrement. La transmission de la rotation de l'arbre du moteur 63 au codeur 20 associé peut alors être effectuée à l'aide d'un système du type poulie-courroie afin de préserver le rendement du moteur 63 tout en minimisant le jeu et le bruit dans le mécanisme et supporter des vitesses de rotation importantes.

La biellette 80 peut alors être montée sur l'écrou 66 de sorte qu'une translation de l'écrou 66 entraine une translation de l'extrémité de la biellette 80 qui est fixée sur l'écrou 66 à l'aide de la liaison mécanique 82.

Afin d'éviter l'application d'efforts transverses sur la tige filetée 64 du vérin 62 qui risqueraient de le bloquer, voire de l'abîmer, l'écrou 66 peut être monté sur une glissière 68 qui est fixée sur la structure de jambe inférieure 2.

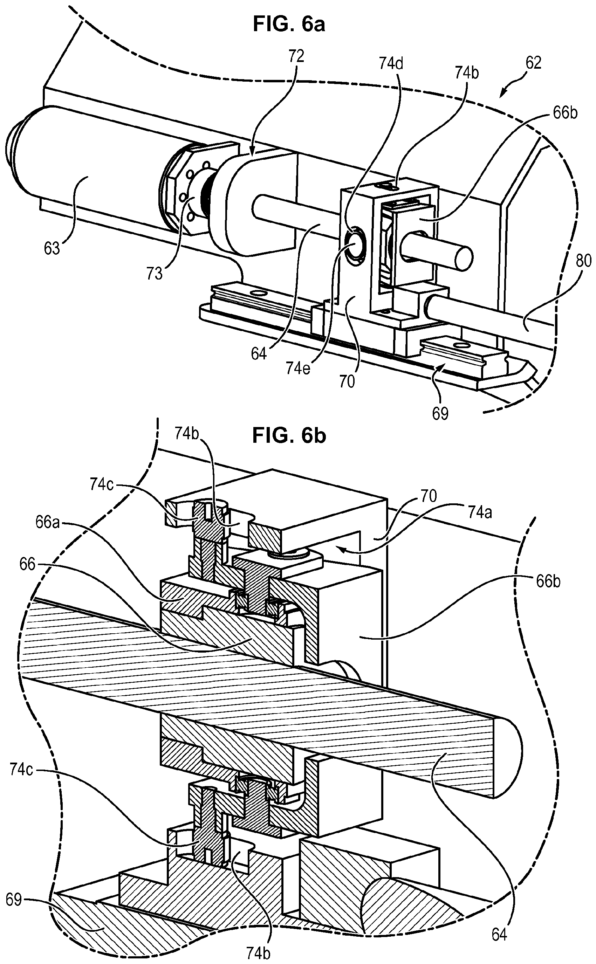

La glissière 68 peut notamment comprendre un rail de guidage 69 fixé sur la structure de jambe inférieure 2 et un chariot 70 mobile en translation le long du rail de guidage 69. L'écrou 66 est alors fixé sur le chariot 70, de sorte que la rotation de la tige filetée 64 par rapport à l'écrou 66 entraine la translation de l'écrou 66 et du chariot 70 le long du rail de guidage 69 de la glissière 68. On notera que l'écrou 66 et le chariot 70 peuvent réaliser des mouvements différents, notamment dans le cas où l'écrou 66 n'est pas encastré sur le chariot 70. C'est notamment le cas de l'exemple de réalisation illustré en figure 6b.

Afin de compenser les erreurs de positionnement éventuelles entre le moteur 63 et la tige filetée 64, entre la tige filetée 64 et l'écrou 66 et/ou entre l'écrou 66 et la glissière 68 qui seraient susceptibles d'endommager le vérin 62, les actionneurs 60 comprennent en outre des moyens adaptés pour compenser ces erreurs potentielles.

A cet effet, selon un premier mode de réalisation illustré en figures 6a et 6b, l'actionneur 60 peut comprendre un roulement rigide 72 fixé entre l'arbre de sortie 63a du moteur 63 et la tige filetée 64, en combinaison avec des moyens d'accouplement flexibles 73 de la tige filetée 64 avec l'arbre de sortie 63a du moteur 63. Un tel roulement rigide 72 présente l'avantage de reprendre des efforts qui ne seraient pas supportés par le seul roulement du moteur 63 et d'assurer le guidage en rotation de la tige filetée 64.

Dans ce mode de réalisation, l'écrou 66 peut alors être fixé sur le chariot 70 par l'intermédiaire d'une liaison mécanique 74 susceptible de bloquer la rotation et la translation de l'écrou 66 selon l'axe principal de la tige filetée 64 par rapport au chariot 70.

Par exemple, le chariot 70 peut comprendre des parois définissant une chambre 74a configurée pour recevoir l'écrou 66 et être traversée par la tige filetée 64. Un premier orifice 74b, configuré pour recevoir un pion anti-rotation 74c faisant saillie de l'écrou 66, peut être formé dans l'une des parois de la chambre 74a. De préférence, deux orifices 74b, associés à deux pions anti-rotation 74c de l'écrou 66, sont formés dans des parois en regard de la chambre 74a afin d'améliorer le blocage en rotation de l'écrou 66. Dans une forme de réalisation, les deux orifices 74b et les deux pions anti-rotation 74c sont répartis symétriquement par rapport à l'axe de la tige filetée 64 de manière à ne pas générer d'effort parasite sur cette tige filetée 64.

Le cas échéant, ces deux orifices 74b peuvent également participer à la transmission du mouvement de translation de l'écrou 66 au chariot 70. En variante, deux logements 74d, configurés pour recevoir chacun un galet 74e faisant saillie de l'écrou 66 afin d'entrainer le chariot 70 en translation par rapport au rail de guidage 69, peuvent être formés dans les parois de la chambre 74a. Dans cette variante de réalisation, les orifices 74b recevant les pions anti-rotation 74c peuvent alors être de forme oblongue, le grand axe des orifices 74b étant aligné avec l'axe de la tige filetée 64, afin de former un jeu avec les parois de la chambre 74a et compenser les défauts d'alignement susceptibles de bloquer la translation de l'écrou 66 par rapport à la tige filetée 64. Dans une forme de réalisation, les deux logements 74d et les deux galets 74e sont répartis symétriquement par rapport à l'axe de la tige filetée 64 de manière à ne pas générer d'effort parasite sur cette tige filetée 64.

Les figures 6a et 6b illustrent un exemple de réalisation d'une telle liaison mécanique. Dans cet exemple de réalisation, la chambre 74a est de forme sensiblement rectangulaire et comprend une paroi inférieure, en regard du rail de guidage 69, une paroi supérieure, opposée à la paroi inférieure, et deux parois latérales, qui relient la paroi inférieure et la paroi supérieure. Deux orifices 74b, qui ont ici la forme d'une fente oblongue, sont formés respectivement dans la paroi inférieure et la paroi supérieure de la chambre 74a du chariot 70. Des logements 74d, également de forme oblongue, sont par ailleurs formés dans les parois latérales de la chambre 74a.

La liaison mécanique 74 comprend en outre une bague 66a, rapportée et fixée solidairement sur l'écrou 66, par exemple par encastrement, et un chariot auxiliaire 66b, monté à pivotement sur la bague 66a. Le chariot auxiliaire 66b, la bague 66a et l'écrou 66 sont logés dans la chambre 74a du chariot 70.

Le chariot auxiliaire 66b comprend deux pions anti-rotation 74c opposés faisant saillie et configurés pour venir se loger dans les orifices 74b formés dans les parois supérieure et inférieure de la chambre 74a du chariot 70 afin de bloquer en rotation le chariot auxiliaire 66b par rapport au chariot 70, lors de la rotation de la tige filetée 64. L'axe de pivotement du chariot auxiliaire 66b par rapport à la bague 66a est sensiblement parallèle à l'axe reliant des pions anti-rotation 74c.

La bague 66a est par ailleurs équipée de galets 74e configurés pour pénétrer dans les logements 74d du chariot 70 et entrainer le chariot 70 de la glissière 68 en translation.

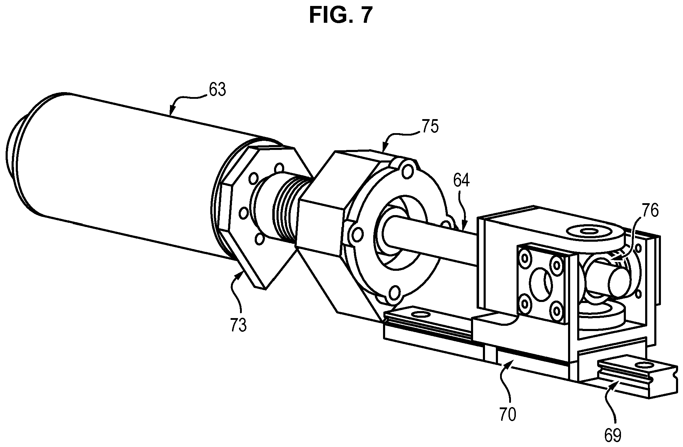

Selon un deuxième mode de réalisation illustré en figure 7, l'actionneur 60 comprend une liaison rotule 75, interposée entre l'arbre de sortie 63a du moteur 63 et la tige filetée 64, associée à une liaison mécanique 76 susceptible de bloquer la rotation de l'écrou 66 par rapport à la tige filetée 64 et d'autoriser la translation de l'écrou 66 par rapport à la structure de jambe inférieure 2, et donc au rail de guidage 69.

La liaison mécanique 76 peut notamment comprendre un joint de Cardan.

La liaison rotule 75 peut comprendre un roulement à rotule sur billes ou sur rouleaux, par exemple un roulement à rotule du type 2600-2RS. Un roulement à rotule 75 permet en effet un mouvement relatif des bagues logeant les éléments roulants, et autorisent ainsi le guidage isostatique de la tige filetée 64 malgré la présence de défauts d'alignement entre la tige filetée 64 et le rail de guidage 69.

Des moyens d'accouplement flexibles 73 de la tige filetée 64 avec l'arbre de sortie 63a du moteur 63 peuvent également être prévus pour compenser les éventuels défauts d'alignement de la tige filetée 64 et de l'arbre de sortie 63a du moteur 63.

Le vérin 62 est de préférence du type vis à billes comprenant des roulements à billes plutôt que des coussinets, afin de réduire les efforts liés à la mise en glissement.

Ce deuxième mode de réalisation présente l'avantage d'être moins encombrant et moins complexe que le premier mode de réalisation et de réduire les efforts parasites pouvant être appliqués à l'écrou 66 en raison des frottements au niveau du contact linéique entre les galets 74e et le chariot 70 du premier mode de réalisation.

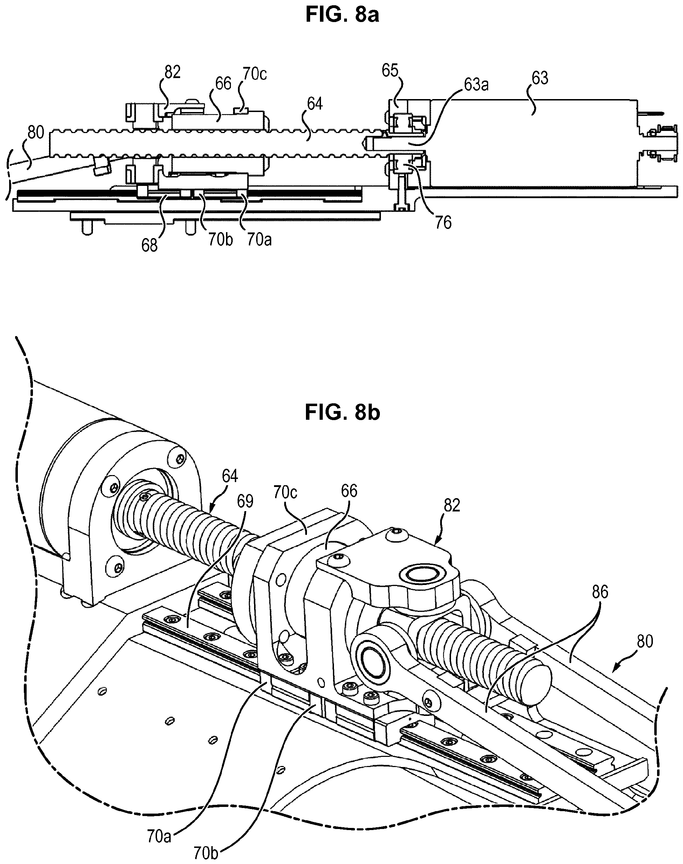

Selon un troisième mode de réalisation illustré en figures 8a et 8b, l'actionneur 60 comprend un roulement mécanique simple 76 interposé entre l'arbre de sortie 63a du moteur 63 et la tige filetée 64, tandis que l'écrou 66 est encastré sur le chariot 70 de la glissière 68, par exemple par vissage ou soudage.

Par roulement mécanique simple 76, on comprendra une liaison mécanique du type pivot comprenant deux bagues coaxiales entre lesquelles sont placées des éléments roulants tels que des billes, des rouleaux, des coussinets, etc. et qui sont maintenus espacés les uns des autres par une cage. Un roulement mécanique 76 pouvant être mis en œuvre dans un actionneur 60 conforme à ce mode de réalisation comprend par exemple un roulement du type 629-ZZ.

Le roulement mécanique 76 présente de préférence un défaut d'alignement compris entre cinq minutes d'arc et quinze minutes d'arc, typiquement d'une dizaine de minutes d'arc, afin de compenser les défauts d'alignement entre la tige filetée 64 et le logement du roulement 76, par exemple dans la pièce 65. La Demanderesse s'est en effet aperçue qu'un tel roulement mécanique 76, qui est moins complexe, moins encombrant et moins cher qu'un roulement à rotule 75, suffisait en effet pour éviter tout endommagement de l'actionneur 60 dû aux défauts de fabrication des pièces et en particulier au défaut d'alignement entre la tige filetée 64 et l'arbre de sortie 63a du moteur 63. En effet, un défaut d'alignement de quelques minutes d'arc est possible entre la tige filetée 64 et l'arbre de sortie 63a du moteur 63 en laissant un jeu volontaire entre l'arbre de sortie 63a et l'alésage de la tige filetée 64 dans lequel l'arbre de sortie est inséré. La transmission de la rotation entre l'arbre 63a et la tige filetée 64 peut alors être réalisée par obstacle permettant le défaut d'alignement, par exemple à l'aide d'une clavette dans une rainure. Ce roulement mécanique 76 permet de s'affranchir de l'utilisation de moyens d'accouplement flexibles entre l'arbre de sortie 63a et la tige filetée 64, grâce notamment au léger défaut de coaxialité dès lors admissible entre l'axe de l'arbre de sortie 63a et l'axe de la tige filetée 64. Enfin, contrairement au deuxième mode de réalisation, qui nécessite de placer le roulement à rotule 75 à distance des moyens d'accouplement flexibles 73 et qui est donc plus encombrant suivant l'axe de la tige filetée 64, le roulement mécanique 76 peut être placé directement au niveau de l'arbre de sortie 63a du moteur 63.

Par exemple, le roulement mécanique 76 peut comprendre un roulement à billes présentant un défaut d'alignement d'environ dix minutes d'arc, tel que le roulement à billes 629-ZZ.

En comparaison avec le deuxième mode de réalisation, l'encastrement de l'écrou 66 sur le chariot 70 de la glissière 68 présente l'avantage de limiter fortement l'encombrement radial de l'actionneur 60 au niveau de l'écrou 66, et de simplifier structurellement l'actionneur 60 en limitant le nombre de pièces nécessaires. La fixation de l'écrou 66 sur la glissière 68 à l'aide d'un joint de Cardan crée en outre une distance importante entre l'écrou 66 et la glissière 68 susceptible de générer un bras de levier important : le remplacement de ce joint de Cardan 76 par une liaison encastrement permet ainsi de réduire les efforts appliqués par la tige filetée 64 sur la glissière 68.

Le remplacement du joint de Cardan 76 par une liaison encastrement est rendu possible grâce aux défauts d'alignement tolérés par le roulement 76 et par une maîtrise possible des défauts de fabrication des pièces mécaniques.

Afin de réduire les efforts parasites, et en particulier les efforts transverses susceptibles d'être transmis par l'écrou 66 et la glissière 68 à la tige filetée 64, et de limiter les risques de blocage de l'actionneur 60, le chariot 70 peut comprendre au moins deux patins 70a, 70b, montés mobiles en translation sur le rail de guidage 69 de la glissière 68, sur lesquels est fixée solidairement une pièce de liaison 70c. Par exemple, le chariot 70 peut comprendre deux paires de patins 70a, 70b et la glissière peut comprendre deux rails de guidage 69, chaque paire de patins 70a, 70b étant montée sur un rail de guidage 69 associé de la glissière 68.

L'écrou 66 peut alors être encastré sur la pièce de liaison 70c, au niveau du premier patin 70a, tandis que la biellette 80 peut être montée sur la pièce de liaison 70c au niveau du deuxième patin 70b. De la sorte, les efforts transverses appliqués par la biellette 80 sur l'actionneur 60 ne sont pas directement transmis à la tige filetée 64, mais sont en partie repris par les deux patins 70a, 70b du chariot 70, qui les amortissent tout en garantissant le déplacement de la pièce de liaison 70c, et donc la transmission des mouvements de l'écrou 66 vers la billette 80.

Dans une variante de réalisation de ce mode de réalisation, l'écrou 66 peut être fixé sur la glissière 68 par l'intermédiaire d'une liaison pivot, en lieu et place de la liaison encastrement. Une telle configuration permet en effet déjà de réduire la distance radiale entre la tige filetée 64 et la glissière 68. Toutefois, la Demanderesse s'est aperçue que les contraintes en termes de précision de fabrication sont sensiblement les mêmes lorsque la liaison mécanique est une liaison pivot ou une liaison encastrement : ainsi, une liaison encastrement est-elle préférée, en particulier lorsque les efforts transverses sont en partie repris par le chariot 70 équipé de deux patins 70a, 70b.

Enfin, dans le but encore de mieux résister aux efforts parasites susceptibles d'être appliqués à la tige filetée 64, notamment par la biellette 80, le diamètre de la tige filetée 64 peut être augmenté en comparaison avec le diamètre des tiges filetées des deux premiers modes de réalisation, ce qui permet de s'affranchir de solutions purement isostatiques. Ainsi, le diamètre de la tige filetée peut par exemple être de l'ordre de 10 mm dans les deux premiers modes de réalisation, tandis qu'il peut être de 12 mm dans la troisième forme de réalisation.

On notera qu'une telle augmentation du diamètre de la tige filetée 64 ne signifie pas pour autant une augmentation de l'encombrement de l'actionneur 60. Certes, l'augmentation du diamètre de la tige filetée 64 implique une augmentation du pas de la tige 64 et donc de la course de l'écrou 66, à moteur 63 égal. Toutefois, la mise en œuvre du roulement mécanique 76 simple au lieu des moyens d'accouplement flexibles 73 et du roulement à rotule 75 permet, de son côté, de réduire la longueur axiale de l'actionneur 60 en réduisant l'espace nécessaire entre l'arbre de sortie 63a du moteur 63 et la tige filetée 64.

Quel que soit le mode de réalisation, la biellette 80 peut être fixée sur l'écrou 66 à l'aide d'une liaison mécanique 82 pouvant comprendre une liaison pivot, deux liaisons pivots d'axe sensiblement perpendiculaire, une liaison rotule 84 ou une liaison rotule à doigt telle qu'un joint de Cardan.

Dans l'exemple de réalisation illustré sur les figures, la biellette 80 est par exemple fixée sur la deuxième partie du chariot 70 à l'aide d'un joint de Cardan 82. Cette forme de réalisation permet en effet de faire coïncider le centre de la liaison mécanique entre la biellette 80 et le vérin 62 avec l'axe de la tige filetée 64, et de réduire ainsi les moments appliqués par le mécanisme sur la glissière 68.

Par ailleurs, la biellette 80 peut être fixée sur la structure de pied 4 à l'aide d'une liaison rotule 84. Pour des questions d'encombrement et de transmission des efforts des actionneurs 60 à la structure de pied 4, la biellette 80 est de préférence fixée dans une zone postérieure de la structure de pied 4, par exemple une zone de la structure de pied 4 configurée pour venir en regard du talon de l'utilisateur portant l'exosquelette 1.

Enfin, la biellette 80 peut comprendre deux bras 86, reliés rigidement entre eux au niveau de la liaison mécanique avec le vérin 62 et de la liaison rotule avec la structure de pied 4. Cette forme de réalisation permet en effet à la biellette 80 de suivre le mouvement de l'écrou 66 lors de sa translation en direction du moteur 63 sans risquer de venir en contact avec la tige filetée 64, qui peut alors venir se placer entre les deux bras de la biellette 80. La présence des deux bras présente en outre l'avantage de permettre une meilleure reprise des efforts en traction et en compression appliqués à la biellette 80.

La structure de pied 4 peut notamment comprendre une pièce intermédiaire 42 montée mobile en rotation à l'aide de liaisons pivot passives 44, 46 sur la structure de pied 4 et sur la structure de jambe inférieure 2, afin de permettre à la structure de cheville de pivoter autour des deux axes de pivotement, sur commande des actionneurs 60 parallèles.

Plus précisément, la pièce intermédiaire 42 peut être montée mobile en rotation autour du premier axe de pivotement X1 sur la structure de jambe inférieure 2, et autour du deuxième axe de pivotement X2 sur la structure de pied 4, grâce à des liaisons pivot passives 44, 46.

La liaison pivot passive 44 autour du premier axe de pivotement X1 peut notamment comprendre des roulements à éléments roulants coniques en O ou en X, centrés sur le premier axe de pivotement X1 et s'étendant de part et d'autre de la structure de pied 4. De tels roulements en O ou en X présentent un faible encombrement latéral et ne forment ainsi pas une gêne pour l'utilisateur lors de la marche en risquant de venir en contact avec des obstacles. Par exemple, deux roulements du type 61904-ZZ peuvent être mis en œuvre.

Cette première liaison pivot passive 44 permet ainsi aux actionneurs 60 de faire tourner la structure de pied 4 autour du deuxième axe de pivotement X2 sans risquer de blocage de la structure au niveau du premier axe de pivotement X1.

La liaison pivot passive 46 autour du deuxième axe de pivotement X2 comprend de préférence un unique roulement dans la mesure où l'insertion de deux roulements de part et d'autre du deuxième axe de pivotement X2 gênerait le pied de l'utilisateur portant l'exosquelette 1. Cette deuxième liaison pivot passive 46 peut par exemple comprendre un roulement combiné à aiguilles avec butée à billes du type NKIB.

De la sorte, l'actionnement de l'un et/ou de l'autre des actionneurs 60, en particulier dans le cas d'un vérin 62 associé à une biellette 80, entraine la rotation de la structure de pied 4, sans risquer de blocage.

Ici, la structure de pied 4 comprend une pièce de fixation 48, encastrée sur la structure de pied 4 et supportant la liaison pivot passive 46 autour du deuxième axe de pivotement X2, la pièce intermédiaire 42 étant montée en rotation sur la pièce de fixation 48 autour du deuxième axe de pivotement X2. Dans l'exemple de réalisation illustré sur les figures, les biellettes 80 sont fixées sur cette pièce de fixation 48, par l'intermédiaire des liaisons rotules 84, de part et d'autre de la liaison pivot passive 46. Une telle configuration permet ainsi de fixer facilement les biellettes 80 sur la structure de pied 4, dans une zone adjacente au talon de l'utilisateur, sans gêner pour autant l'introduction du pied de l'utilisateur dans la structure de pied 4.

Afin de permettre le montage de la pièce intermédiaire 42 en rotation autour du premier axe de pivotement X1, qui s'étend au niveau des malléoles de l'utilisateur qui porte l'exosquelette 1, la pièce intermédiaire 42 peut présenter une section en U, configurée pour contourner la cheville de l'utilisateur lorsque son pied est placé dans la structure de pied 4, tout en permettant aux liaisons pivot passives 44, 46 de la pièce intermédiaire 42 de venir en regard de ses malléoles. On comprendra bien entendu que la pièce intermédiaire 42 peut indifféremment être réalisée d'un seul tenant, ou en variante comprendre plusieurs éléments qui sont assemblés de manière à former une pièce monobloc.

Un exemple de fonctionnement de l'exosquelette 1 va à présent être décrit, dans le cas où les actionneurs 60 comprennent un vérin 62 du type vis à billes ou vis-écrou 66 et une biellette 80. Les deux vérins 62 sont identiques, et comprennent par conséquent des tiges filetées 64 de même longueur et de même pas, un même moteur 63 et des biellettes 80 identiques. Les tiges filetées 64 peuvent être mises en rotation dans le sens trigonométrique ou dans le sens horaire.

Lorsque les deux tiges filetées 64 sont mises en mouvement de manière égale et simultanée de sorte à translater l'écrou 66 en direction de l'extrémité libre des tiges 64, l'extrémité des biellettes 80 qui est fixée sur l'écrou 66 est déplacée en direction de la structure de pied 4. L'extrémité opposée des biellettes 80 applique alors un effort sur la structure de pied 4 qui tend à faire pivoter la structure de pied 4 autour du premier axe de pivotement X1 uniquement. Ce mouvement permet ainsi de fléchir le pied de l'utilisateur portant l'exosquelette 1.

Lorsque les deux tiges filetées 64 sont mises en mouvement de manière égale et simultanée, dans le sens de rotation opposé de sorte à translater l'écrou 66 en direction du moteur 63, l'extrémité des biellettes 80 qui est fixée sur l'écrou 66 est déplacée dans la direction opposée à la structure de pied 4, vers la liaison mécanique du genou 3. L'extrémité opposée des biellettes 80 applique alors un effort sur la structure de pied 4 qui tend à faire pivoter la structure de pied 4 autour du premier axe de pivotement X1 uniquement, dans le sens opposé, ce qui permet de tendre le pied de l'utilisateur.

Lorsque les deux tiges filetées 64 sont mises en mouvement de manière différente, par exemple l'une dans le sens trigonométrique et l'autre dans le sens horaire, l'une des biellettes 80 est déplacée en direction de la structure de pied 4 tandis que l'autre des biellettes 80 est déplacée dans la direction opposée, ce qui permet de faire pivoter la structure de pied 4 autour du deuxième axe de pivotement X2 et donc d'effectuer des mouvements d'inversion ou d'éversion, selon le sens de rotation de chaque tige filetée 64. Bien entendu, la course des deux écrous 66 peut être identique ou différente afin d'ajuster au mieux l'orientation du pied et, le cas échéant, induire une rotation de la structure de pied 4 autour du premier et/ou du deuxième axe de pivotement X1, X2.

Le pilotage de la structure de pied 4 peut donc être réalisé de manière très précise, en fonction du sens de rotation et de la course de chaque tige filetée 64.

L'exosquelette 1 peut également comprendre un système 100 configuré pour soulager les moteurs 60c, 63 des actionneurs 60 pour fournir l'impulsion nécessaire au décollement du pied en fin de phase d'appui. En effet, à la fin de la phase d'appui, un couple important est nécessaire autour de l'axe de pivotement X1 afin d'assurer le mouvement de marche de l'exosquelette 1.

Ainsi, le système 100 peut comprendre un ensemble formant ressort en compression, fixé d'une part sur la pièce intermédiaire 42 et d'autre part sur la structure de jambe inférieure 2, qui est configuré pour ne solliciter la structure de pied 4 que pendant la phase d'appui, et notamment lors du décollement du pied.

A cet effet, l'ensemble formant ressort 100 peut par exemple comprendre un corps creux 110, comprenant une première 112 et une deuxième 114 extrémité et logeant un organe élastiquement déformable 120 présentant une première raideur.

Le corps creux 110 est monté dans un logement 105 formé dans la structure de jambe inférieure 2. Le logement comprend un fond 106 et une embouchure 108, la première extrémité 112 du corps creux 110 étant en regard du fond 106. Le fond 106 comprend en outre un orifice traversant 107. L'embouchure 108 peut être ouverte et déboucher sur l'extérieure, ou fermée par un capot.

L'organe élastiquement déformable 120 peut notamment comprendre un ressort. Le corps creux 110 peut être de forme cylindrique ou tubulaire.

Le ressort 120 est monté dans le corps creux 110 de manière à venir en butée contre sa première extrémité 112 et est connecté à un élément de fixation 130 traversant le logement 105, le corps creux 110 et le ressort 120 et faisant saillie de sa première extrémité 112 et de l'orifice traversant 107. Cet élément de fixation 130 est par ailleurs fixé sur la structure de pied 4, par exemple au niveau de la pièce intermédiaire 42.

Dans une forme de réalisation, l'élément de fixation 130 est flexible et peut par exemple comprendre un câble. Le caractère flexible permet en effet à l'élément de fixation 130 de s'adapter aux mouvements de rotation de la structure de pied 4 et de ne pas transmettre d'efforts autres que les efforts en traction à l'ensemble formant ressort 100. Dans ce qui suit, l'invention sera plus particulièrement décrite dans le cas d'un élément de fixation 130 comprenant un câble. Ceci n'est cependant pas limitatif, le câble n'étant qu'un mode de réalisation possible de l'élément de fixation.

L'objectif étant de soulager les moteurs 60c, 63 lors de la phase d'appui et donc lorsque le pied est fléchi, le câble 130 est fixé dans une zone postérieure de la structure de pied 4, de préférence dans une zone située entre le premier axe de pivotement X1 et le talon de la structure de pied 4. Notamment, le câble 130 peut être fixé sur la pièce intermédiaire 42, par exemple à l'aide d'une pièce 43 rapportée sur la pièce intermédiaire 42 et configurée pour bloquer le câble 130 par rapport à la pièce intermédiaire 42.

Le ressort 120 logé dans le corps creux 110 est de préférence coaxial avec le corps creux 110.

La connexion entre le ressort 120 et le câble 130 peut être réalisée par collage ou soudage. En variante, le ressort 120 peut comprendre une pièce de blocage 122, fixée sur une partie du ressort 120 qui s'étend à distance de la première extrémité 112 du corps creux 110, tandis que le câble 130 présente une surépaisseur 132 configurée pour venir en butée contre la pièce de blocage 122. Une traction sur le câble 130 dans une direction opposée à la deuxième extrémité 114 du corps creux 110 a donc pour effet de mettre en contact la surépaisseur 132 avec la pièce de blocage 122 et de comprimer le ressort 120.

La raideur et la longueur du ressort 120 sont choisies en fonction de la longueur du câble 130 et de la plage angulaire pouvant être parcourue par la structure de pied 4 par rapport à la structure de jambe inférieure 2 de manière à garantir que le câble 130 reste tendu à tout instant, quelle que soit la position de la structure de pied 4 par rapport à la structure de jambe inférieure 2, et donc quelle que soit la phase de marche de l'exosquelette 1. Cela permet en effet d'améliorer le temps de réaction de l'ensemble formant ressort 100 en évitant les éventuels à-coups qui pourraient être inconfortables pour l'utilisateur.

Le câble 130 comprend en outre une butée d'arrêt 134, fixée sur ou formée intégralement avec le câble 130 entre la surépaisseur 132 et l'extrémité du câble 130 qui est logée dans le corps creux 110, configuré pour coopérer avec une protubérance 116, fixée dans le corps creux 110 et formant un obstacle à la butée d'arrêt 134. La protubérance 116 peut par exemple présenter la forme d'une collerette. La butée d'arrêt 134 peut quant à elle être fixée sur l'extrémité du câble 130.

Enfin, l'ensemble formant ressort 100 comprend un ressort utile 140, positionné dans le logement 105 autour du corps creux 100. Le ressort utile 140 est en appui et comprimé entre le fond 106 du logement 105 de la structure de jambe inférieure 2 et une butée d'appui 118 formée sur le corps creux 110. Le ressort utile 140 et le corps creux 110 sont donc coaxiaux, le corps creux 110 formant un support pour le ressort utile 140. La butée d'appui 118 du corps creux 110 peut notamment être fixée à proximité de sa deuxième extrémité 114, et comporter un boulon afin de permettre le déplacement éventuel de la butée d'appui 118 par rapport au corps creux 110 et donc l'ajustement de la raideur du ressort utile 140.

De la sorte, lorsqu'un effort en traction est appliqué sur le câble 130, la surépaisseur 132 est déplacée dans le corps creux 110 et comprime le ressort 120 jusqu'à ce que la butée d'arrêt 134 vienne en contact avec la protubérance 116 et bloque le déplacement relatif du câble 130 et du ressort 120 par rapport au corps creux 110. Ainsi, le câble 130 est bloqué en translation par la protubérance 116 et ne peut plus comprimer le ressort 120. Si la structure de pied 4 continue de tirer sur le câble 130, l'ensemble formé par le câble 130, le corps creux 110 et la butée d'appui 118 se déplacent, comprimant alors le ressort 140 entre la butée d'appui 118 et le fond 106 du logement 105, le logement 105 étant solidaire en mouvement de la structure de jambe inférieure 2.

L'ensemble formant ressort 100 peut être dimensionné pour que cette configuration corresponde au cas où la structure de pied 4 initie la phase d'appui sur le sol.

La raideur du ressort utile 140 est de préférence plus grande que la raideur du ressort 120 logé dans le corps creux 110, afin de garantir que seul le ressort 120 logé dans le corps creux 110 se comprime tant que la butée d'arrêt 134 ne vient pas en contact avec la protubérance 116. Dans cette phase, il n'est en effet pas nécessaire de soulager les moteurs 60c, 63. Puis, une fois que la butée d'arrêt 134 vient en butée contre la protubérance 116, le câble 130 applique un effort de traction sur le corps creux 110 qui tend donc à comprimer le ressort utile 140, et donc à générer un couple sur la structure de pied 4 autour du premier axe de pivotement X1 de manière à tendre le pied, ce qui soulage les moteurs 60c, 63 des actionneurs 60 et permet de fournir l'impulsion nécessaire au décollement du pied lors d'un cycle de marche.

On comprendra bien entendu que d'autres organes élastiques présentant une raideur peuvent être mis en œuvre, en lieu et place du ressort 120 logé dans le corps creux 110 et/ou du ressort utile 140.

Par ailleurs, l'ensemble formant ressort 100 de compression peut être mis en œuvre indépendamment de l'exosquelette 1 décrit ici, sur tout dispositif nécessitant l'application d'un effort uniquement pendant certaines phases de travail du dispositif. La description de cet ensemble formant ressort 100 s'applique donc à tout dispositif comprenant une première pièce, sur laquelle peut être fixé le corps creux 110 qui porte le ressort utile 140, et une deuxième pièce, mobile par rapport à la première pièce et sur laquelle peut être fixée l'autre extrémité du ressort utile 140 afin d'y appliquer un effort. L'élément de fixation 130 est alors fixé sur la deuxième pièce de manière à appliquer un effort sur le ressort 120 logé dans le corps creux 110 lorsque la deuxième pièce est déplacée par rapport à la première, jusqu'à atteindre un seuil prédéfini à partir duquel l'élément de fixation, le ressort 120 et le corps creux 110 se déplacent solidairement, seul le ressort utile 140 étant sollicité et appliquant un effort sur les deux pièces.

## Revendications

1. Exosquelette (1) comprenant :
- une structure de pied (4), comprenant un plan de support (40) configuré pour recevoir un pied d'un utilisateur,
- une structure de jambe inférieure (2) configurée pour recevoir une partie inférieure d'une jambe de l'utilisateur,
- une liaison mécanique de genou (3), configurée pour relier la structure de jambe inférieure (2) à une structure de jambe supérieure (6) configurée pour recevoir une partie supérieure d'une jambe de l'utilisateur, la liaison mécanique de genou (3) présentant un axe de pivotement (Y), et
- une liaison mécanique de cheville (5), reliant la structure de pied (4) à la structure de jambe inférieure (2), la liaison mécanique de cheville (5) comprenant une première liaison pivot (50) présentant un premier axe de pivotement (X1), ledit premier axe de pivotement (X1) étant sensiblement parallèle à l'axe de pivotement (Y) de la liaison mécanique de genou (3), et une deuxième liaison pivot (52) présentant un deuxième axe de pivotement (X2), ledit deuxième axe de pivotement (X2) s'étendant dans un plan perpendiculaire au premier axe de pivotement (X1),
l'exosquelette (1) étant **caractérisé en ce que** le deuxième axe de pivotement (X2) forme avec le plan de support (40) un angle compris entre 30° et 60° lorsque l'exosquelette (1) est debout et au repos.

2. Exosquelette (1) selon la revendication 1, dans lequel le deuxième axe de pivotement (X2) forme un angle compris entre 40° et 50° avec le plan de support (40) lorsque l'exosquelette est debout et au repos, de préférence de l'ordre de 45°.

3. Exosquelette (1) selon l'une des revendications 1 ou 2, comprenant en outre deux actionneurs (60) en parallèle, fixés entre la structure de pied (4) et la structure de jambe inférieure (2) et configurés pour contrôler une position angulaire de la structure de pied autour du premier et du deuxième axe de pivotement (X1, X2) de la liaison mécanique de cheville (5).

4. Exosquelette (1) selon la revendication 3, dans lequel les actionneurs (60) en parallèle sont fixés de part et d'autre de la structure de jambe inférieure (2).

5. Exosquelette (1) selon l'une des revendications 3 ou 4, dans lequel les actionneurs (60) comprennent chacun :
- un actionneur linéaire (62), monté sur la structure de jambe inférieure, et
- une biellette (80), montée d'une part sur l'actionneur linéaire (62) et d'autre part sur la structure de pied (4) à l'aide d'une liaison rotule, de sorte qu'une translation de l'actionneur linéaire (62) entraine une rotation de la biellette (80) par rapport à la structure de pied (4).

6. Exosquelette selon la revendication 5, dans lequel l'actionneur linéaire comprend un vérin associé à un moteur, le vérin comprend une tige filetée, entrainée en rotation par le moteur, et un écrou fixe en rotation par rapport à la structure de jambe, la biellette comprenant une extrémité montée sur l'écrou de sorte qu'une translation de l'écrou entraine une translation de l'extrémité de la biellette,
le vérin comprenant en outre un roulement mécanique simple interposé entre une sortie du moteur et la tige filetée, ledit roulement mécanique présentant un défaut d'alignement compris entre cinq minutes d'arc et quinze minutes d'arc, typiquement d'environ dix minutes d'arc.

7. Exosquelette (1) selon l'une des revendications 1 à 6, dans lequel :
- la première liaison pivot (50) est positionnée sur la structure de pied (4) de sorte à venir en regard d'une malléole interne et d'une malléole externe d'un utilisateur portant l'exosquelette (1), et/ou
- la deuxième liaison pivot (52) est positionnée sur la structure de pied (4) de sorte à venir en regard d'un talon ou d'un tendon d'Achille de l'utilisateur.

8. Exosquelette (1) selon l'une des revendications 1 à 7, dans lequel le premier axe de pivotement (X1) et l'axe de pivotement (Y) de la liaison mécanique de genou forment un angle compris entre 0° et une quinzaine de degrés, de préférence entre 6° et 10°, par exemple 8°.

9. Exosquelette (1) selon l'une des revendications 1 à 8, comprenant en outre une pièce intermédiaire (42) qui est d'une part montée sur la structure de pied (4) en étant libre en rotation par rapport à la structure de pied (4) autour du deuxième axe de pivotement (X2), et d'autre part montée à pivotement autour du premier axe de pivotement (X1) sur la structure de jambe inférieure (2).

10. Exosquelette (1) selon la revendication 9, comprenant en outre un ensemble formant ressort (100) en compression, fixé d'une part sur la pièce intermédiaire (42) et d'autre part sur la structure de jambe inférieure (2).

11. Exosquelette (1) selon la revendication 10, dans lequel l'ensemble formant ressort (100) comprend un premier organe élastiquement déformable (140), le premier organe (140) étant connecté d'une part à la pièce intermédiaire (42), entre la première et la deuxième liaison pivot (50, 52), à l'aide d'un élément de fixation (130), et d'autre part à la structure de jambe inférieure (2), ledit premier organe (140) étant configuré pour appliquer un effort de traction sur la pièce intermédiaire (42).

12. Exosquelette (1) selon la revendication 11, dans lequel l'élément de fixation (130) est flexible.

13. Exosquelette (1) selon l'une des revendications 11 ou 12, dans lequel l'ensemble formant ressort (100) comprend en outre un corps creux (110) de forme sensiblement allongée présentant une première extrémité (112) et une deuxième extrémité (114) opposée à la première extrémité, ledit corps creux (110) étant monté dans un logement (105) formé dans la structure de jambe inférieure (2), la première extrémité (112) du corps creux (110) étant en regard d'un fond (106) du logement (105), et le premier organe (140) étant monté dans le logement (105) et comprimé entre le fond (106) dudit logement et la deuxième extrémité (114) du corps creux (110).

14. Exosquelette (1) selon la revendication 13, comprenant en outre un deuxième organe élastiquement déformable (120), logé dans le corps creux (110), le deuxième organe (120) étant fixé à proximité de la première extrémité (112) du corps creux (110), l'élément de fixation (130) coopérant avec le deuxième organe (120) de sorte que le deuxième organe (120) est configuré pour tendre l'élément de fixation (130), et l'élément de fixation (130) étant logé dans le corps creux (110) et faisant saillie de la première extrémité dudit corps creux (110) et du fond (106) du logement (105).

15. Exosquelette (1) selon la revendication 14, dans lequel le premier organe et le deuxième organe (140, 120) comprennent un ressort en compression, le deuxième organe (120) présentant une raideur inférieure à la raideur du premier organe (140).

16. Exosquelette (1) selon l'une des revendications 13 à 15, dans lequel l'élément de fixation (130) présente une surépaisseur (132), logée dans le corps creux (110), et le deuxième organe (120) comprend une pièce de blocage (122) configurée pour former une butée pour la surépaisseur (132).

## Patentansprüche

1. Exoskelett (1), umfassend:
- eine Fußstruktur (4), umfassend eine Auflageebene (40), die zur Aufnahme eines Fußes eines Benutzers konfiguriert ist,
- eine Unterschenkelstruktur (2), die zur Aufnahme eines unteren Teils eines Beins des Benutzers konfiguriert ist,
- eine mechanische Knieverbindung (3), die zur Verbindung der Unterschenkelstruktur (2) mit einer Oberschenkelstruktur (6) konfiguriert ist, die zur Aufnahme eines oberen Teils eines Beins des Benutzers konfiguriert ist, wobei die mechanische Knieverbindung (3) eine Drehachse (Y) aufweist, und
- eine mechanische Knöchelverbindung (5), welche die Fußstruktur (4) mit der Unterschenkelstruktur (2) verbindet, wobei die mechanische Knöchelverbindung (5) eine erste Drehverbindung (50) umfasst, die eine erste Drehachse (X1) aufweist, wobei die erste Drehachse (X1) etwa parallel zur Drehachse (Y) der mechanische Knieverbindung (3) ist, und eine zweite Drehverbindung (52), die eine zweite Drehachse (X2) aufweist, wobei sich die zweite Drehachse (X2) in einer Ebene erstreckt, die senkrecht zur ersten Drehachse (X1) ist,
wobei das Exoskelett (1) **dadurch gekennzeichnet ist, dass** die zweite Drehachse (X2) mit der Auflageebene (40) einen Winkel zwischen 30° und 60° bildet, wenn das Exoskelett (1) aufrecht und in Ruhestellung ist.

2. Exoskelett (1) nach Anspruch 1, wobei die zweite Drehachse (X2) einen Winkel mit der Auflageebene (40) bildet, der zwischen 40° und 50° liegt, wenn das Exoskelett aufrecht und in Ruhestellung ist, vorzugsweise in der Größenordnung von 45°.

3. Exoskelett (1) nach einem der Ansprüche 1 oder 2, umfassend ferner zwei parallele Aktuatoren (60), die zwischen der Fußstruktur (4) und der Unterschenkelstruktur (2) befestigt und konfiguriert sind, um eine Winkelposition der Fußstruktur um die erste und die zweite Drehachse (X1, X2) der mechanischen Knöchelverbindung (5) zu steuern.

4. Exoskelett (1) nach Anspruch 3, wobei die parallelen Aktuatoren (60) auf der einen und der anderen Seite der Unterschenkelstruktur (2) befestigt sind.

5. Exoskelett (1) nach einem der Ansprüche 3 oder 4, wobei die Aktuatoren (60) jeweils umfassen:
- einen linearen Aktuator (62), der auf der Unterschenkelstruktur angebracht ist, und
- eine Pleuelstange (80), die zum einen auf dem linearen Aktuator (62) und zum anderen auf der Fußstruktur (4) mit Hilfe einer Kugelgelenkverbindung angebracht ist, so dass eine Translation des linearen Aktuators (62) eine Rotation der Pleuelstange (80) in Bezug auf die Fußstruktur (4) bewirkt.

6. Exoskelett nach Anspruch 5, wobei der lineare Aktuator einen einem Motor zugeordneten Zylinder umfasst, wobei der Zylinder eine Gewindestange umfasst, die von dem Motor rotierend angetrieben wird, und eine in Bezug auf die Beinstruktur rotatorisch feste Mutter, wobei die Pleuelstange ein Ende umfasst, das auf der Mutter derart angebracht ist, dass eine Translation der Mutter eine Translation des Endes der Pleuelstange bewirkt,
wobei der Zylinder ferner ein einfaches mechanisches Lager umfasst, das zwischen einem Ausgang des Motors und der Gewindestange zwischengestellt ist, wobei das mechanische Lager eine Fehlausrichtung zwischen fünf Bogenminuten und fünfzehn Bogenminuten, in typischer Weise von zirka zehn Bogenminuten, aufweist.

7. Exoskelett (1) nach einem der Ansprüche 1 bis 6, wobei:
- die erste Drehverbindung (50) auf der Fußstruktur (4) derart positioniert ist, dass sie gegenüber einem inneren Knöchel und einem äußeren Knöchel eines Benutzers gelangt, der das Exoskelett (1) trägt, und/oder
- die zweite Drehverbindung (52) auf der Fußstruktur (4) derart positioniert, dass sie gegenüber einer Ferse oder einer Achillessehne des Benutzers gelangt.

8. Exoskelett (1) nach einem der Ansprüche 1 bis 7, wobei die erste Drehachse (X1) und die Drehachse (Y) der mechanischen Knieverbindung einen Winkel zwischen 0° und zirka 15 Grad, vorzugsweise zwischen 6° und 10°, beispielsweise von 8°, bilden.

9. Exoskelett (1) nach einem der Ansprüche 1 bis 8, umfassend ferner ein Verbindungsteil (42), das zum einen auf der Fußstruktur (4) angebracht und dabei in Bezug auf die Fußstruktur (4) um die zweite Drehachse (X2) rotatorisch frei ist und zum anderen drehend um die erste Drehachse (X1) auf der Unterschenkelstruktur (2) angebracht ist.

10. Exoskelett (1) nach Anspruch 9, umfassend ferner eine Einheit, die eine Druckfeder (100) bildet, die zum einen auf dem Verbindungsteil (42) und zum anderen auf der Unterschenkelstruktur (2) befestigt ist.

11. Exoskelett (1) nach Anspruch 10, wobei die Einheit, die eine Feder (100) bildet, ein erstes elastisch verformbares Organ (140) umfasst, wobei das erste Organ (140) zum einen an das Verbindungsteil (42) angeschlossen ist, zwischen der ersten und der zweiten Drehverbindung (50, 52), mit Hilfe eines Befestigungselements (130), und zum andere an die Unterschenkelstruktur (2), wobei das erste Organ (140) konfiguriert ist, um eine Zugkraft auf das Verbindungsteil (42) auszuüben.

12. Exoskelett (1) nach Anspruch 11, wobei das Befestigungselement (130) flexibel ist.

13. Exoskelett (1) nach einem der Ansprüche 11 oder 12, wobei die Einheit, die eine Feder (100) bildet, ferner einen etwa länglich geformten Hohlkörper (110) umfasst, der ein erstes Ende (112) und ein zweites Ende (114) gegenüber dem ersten Ende aufweist, wobei der Hohlkörper (110) in einer Aufnahme (105) angebracht ist, die in der Unterschenkelstruktur (2) ausgebildet ist, wobei das erste Ende (112) des Hohlkörpers (110) einem Boden (106) der Aufnahme (105) zugewandt ist und das erste Organ (140) in der Aufnahme (105) angebracht und zwischen dem Boden (106) der Aufnahme und dem zweiten Ende (114) des Hohlkörpers (110) komprimiert ist.

14. Exoskelett (1) nach Anspruch 13, umfassend ferner ein zweites elastisch verformbares Organ (120), das in dem Hohlkörper (110) untergebracht ist, wobei das zweite Organ (120) in der Nähe des ersten Endes (112) des Hohlkörpers (110) befestigt ist, wobei das Befestigungselement (130) mit dem zweiten Organ (120) derart zusammenwirkt, dass das zweite Organ (120) konfiguriert ist, um das Befestigungselement (130) zu spannen, und das Befestigungselement (130) in dem Hohlkörper (110) untergebracht ist und über das erste Ende des Hohlkörpers (110) und den Boden (106) der Aufnahme (105) hervorsteht.

15. Exoskelett (1) nach Anspruch 14, wobei das erste Organ und das zweite Organ (140, 120) eine Druckfeder umfassen, wobei das zweite Organ (120) eine Steifigkeit aufweist, die unter der Steifigkeit des ersten Organs (140) liegt.

16. Exoskelett (1) nach einem der Ansprüche 13 bis 15, wobei das Befestigungselement (130) eine Verdickung (132) aufweist, die in dem Hohlkörper (110) untergebracht ist, und das zweite Organ (120) ein Blockierteil (122) umfasst, das konfiguriert ist, um einen Anschlag für die Verdickung (132) zu bilden.

## Claims

1. An exoskeleton (1) comprising:
- a foot structure (4), comprising a support plane (40) configured to receive a foot of a user,
- a lower leg structure (2), configured to receive a lower portion of a user's leg,
- a mechanical knee link (3), configured to connect the lower leg structure (2) to an upper leg structure (6) configured to receive an upper portion of a user's leg, the mechanical knee link (3) having a pivot axis (Y), and
- a mechanical ankle link (5), connecting the foot structure (4) to the lower leg structure (2), the mechanical ankle link (5) comprising a first pivot link (50) having a first pivot axis (X1), said first pivot axis (X1) being substantially parallel to the pivot axis (Y) of the mechanical knee link (3), and a second pivot link (52) having a second pivot axis (X2), said second pivot axis (X2) extending in a plane perpendicular to the first pivot axis (X1),
the exoskeleton (1) being **characterized in that** the second pivot axis (X2) forms with the support plane (40) an angle comprised between 30° and 60° when the exoskeleton (1) is standing and at rest.

2. The exoskeleton (1) according to claim 1, wherein the second pivot axis (X2) forms an angle comprised between 40° and 50° with the support plane (40) when the exoskeleton is standing and at rest, preferably of the order of 45°.

3. The exoskeleton (1) according to one of claim 1 or 2, further comprising two actuators (60) in parallel, fixed between the foot structure (4) and the lower leg structure (2) and configured to control an angular position of the foot structure about the first and the second pivot axis (X1, X2) of the mechanical ankle link (5).

4. The exoskeleton (1) according to claim 3, wherein the actuators (60) are fixed in parallel on both sides of the lower leg structure (2).

5. The exoskeleton (1) according to one of claim 3 or 4, wherein the actuators (60) each comprise:
- a linear actuator (62), mounted on the lower leg structure, and
- a connecting rod (80), mounted, on the one hand, on the linear actuator (62) and on the other hand on the foot structure (4) using a ball joint, so that a translation of the linear actuator (62) causes a rotation of the connecting rod (80) relative to the foot structure (4) .

6. The exoskeleton according to claim 5, wherein the linear actuator comprises a cylinder associated with a motor, the cylinder comprises a threaded rod, driven in rotation by the motor, and a nut fixed in rotation relative to the leg structure, the connecting rod comprising one end mounted on the nut so that a translation of the nut causes a translation of the end of the connecting rod,
the cylinder further comprising a simple mechanical bearing interposed between an output of the motor and the threaded rod, said mechanical bearing having a misalignment comprised between five minutes of arc and fifteen minutes of arc, typically about ten minutes of arc.

7. The exoskeleton (1) according to one of claims 1 to 6, wherein:
- the first pivot link (50) is positioned on the foot structure (4) so as to face a medial malleolus and a lateral malleolus of a user wearing the exoskeleton (1), and/or
- the second pivot link (52) is positioned on the foot structure (4) so as to face a heel or a user's Achilles tendon.

8. The exoskeleton (1) according to one of claims 1 to 7, wherein the first pivot axis (X1) and the pivot axis (Y) of the mechanical knee link form an angle comprised between 0° and about fifteen degrees, preferably between 6° and 10°, for example 8°.

9. The exoskeleton (1) according to one of claims 1 to 8, further comprising an intermediate part (42) which is mounted, on the one hand, on the foot structure (4) being free to rotate relative to the foot structure (4) about the second pivot axis (X2), and on the other hand, pivotally mounted about the first pivot axis (X1) on the lower leg structure (2).

10. The exoskeleton (1) according to claim 9, further comprising a compression spring assembly (100), fixed, on the one hand, to the intermediate part (42) and on the other hand, to the lower leg structure (2).

11. The exoskeleton (1) according to claim 10, wherein the spring assembly (100) comprises a first elastically deformable member (140), the first member (140) being connected, on the one hand, to the intermediate part (42), between the first and the second pivot link (50, 52), by means of a fastening element (130), and on the other hand, to the lower leg structure (2), said first member (140) being configured to apply a tensile force on the intermediate part (42).

12. The exoskeleton (1) according to claim 11, wherein the fastening element (130) is flexible.

13. The exoskeleton (1) according to one of claims 11 or 12, wherein the spring assembly (100) further comprises a substantially elongated hollow body (110) having a first end (112) and a second end (114) opposite the first end, said hollow body (110) being mounted in a housing (105) formed in the lower leg structure (2), the first end (112) of the hollow body (110) being facing a bottom (106) of the housing (105), and the first member (140) being mounted in the housing (105) and compressed between the bottom (106) of said housing and the second end (114) of the hollow body (110).

14. The exoskeleton (1) according to claim 13, further comprising a second elastically deformable member (120), housed in the hollow body (110), the second member (120) being fixed near the first end (112) of the hollow body (110), the fastening element (130) cooperating with the second member (120) so that the second member (120) is configured to tension the fastening element (130), and the fastening element (130) being housed in the hollow body (110) and projecting from the first end of said hollow body (110) and the bottom (106) of the housing (105).

15. The exoskeleton (1) according to claim 14, wherein the first member and the second member (140, 120) comprise a compression spring, the second member (120) having a lower stiffness than the stiffness of the first member (140).

16. The exoskeleton (1) according to one of claims 13 to 15, wherein the fastening element (130) has a thickened portion (132), housed in the hollow body (110), and the second member (120) comprises a locking part (122) configured to form a stop for the thickened portion (132) .
